# FASCICULE DE BREVET EUROPEEN

(11) **EP 2 921 409 B1**
(45) Date de publication et mention de la délivrance du brevet: **11.07.2018**
(21) Numéro de dépôt: 15000565.0
(22) Date de dépôt: 27.02.2015
(51) Int. Cl.: B64D 45/02, H01R 13/66, H01R 24/20

(54) **Aéronef muni d'un système avionique**
Luftfahrzeug, ausgestattet mit einem Avioniksystem
Aircraft provided with an avionics system

(30) Priorité: 20.03.2014 FR 1400667
(43) Date de publication de la demande: 23.09.2015
(73) Titulaire: Airbus Helicopters, 13725 Marignane Cedex (FR)
(72) Inventeur: Chatain, Bertrand, F-13127 Vitrolles (FR)
(74) Mandataire: GPI & Associés

(56) Documents cités:
- EP-A1- 2 551 771
- US-A1- 2003 179 533
- US-A1- 2010 123 591
- US-A1- 2010 127 193
- US-A1- 2013 171 852

## Description

La présente invention concerne un aéronef muni d'un système avionique notamment adapté pour résister à des impacts de foudre. L'invention se situe donc dans le domaine technique restreint des systèmes sujets à des impacts de foudre

Un aéronef peut comporter un système avionique, à savoir usuellement un système incluant des équipements électroniques et/ou électriques et/ou informatiques reliés par des liaisons filaires, et notamment des liaisons électriques.

Or, un aéronef est par essence susceptible d'être impacté par la foudre en vol.

Un tel impact génère des effets indirects incluant la création d'un courant transitoire électrique cheminant dans le système avionique. Un tel courant transitoire possède une tension élevée et s'avère fortement énergétique.

Par suite, les spécifications des équipements d'un système avionique peuvent conduire un constructeur à intégrer un système de protection contre ces courants transitoires.

Notamment, les équipements avioniques peuvent comporter une diode de suppression de tensions transitoires dans un but exclusif de protection des circuits. Une telle diode est assimilable à un composant de protection de type parasurtenseur.

L'équipement avionique est alors un équipement protégé contre des courants transitoires prédéterminés par une spécification.

Toutefois, ces courants transitoires peuvent avoir des caractéristiques qui diffèrent fortement d'un aéronef à un autre.

Notamment et suite à un impact de foudre, un courant transitoire circulant dans un système avionique d'un aéronef à structure métallique diffère du courant transitoire circulant dans un système avionique d'un aéronef à structure à matériaux composites.

Un équipement avionique dimensionné pour un aéronef à structure métallique risque ne pas répondre aux spécifications imposées sur un aéronef à structure à matériaux composites.

Cet aspect peut poser un problème à un constructeur cherchant par exemple à uniformiser les équipements installés sur une large gamme d'aéronefs.

Actuellement, un constructeur d'aéronef souhaitant réaliser un aéronef à structure à matériaux composites peut mettre en oeuvre trois approches différentes.

La première approche naturelle consiste à modifier les équipements avioniques d'un aéronef à structure métallique pour pouvoir les utiliser sur un aéronef à structure à matériaux composites. Les équipements avioniques sont en effet modifiés pour comprendre un système protection contre les courants transitoires subis sur un aéronef à structure à matériaux composites.

Par exemple, la diode de suppression de tensions transitoires d'un équipement avionique est remplacée par une diode adaptée aux nouvelles spécifications

Cette première approche est efficace mais peut induire des coûts relativement élevés. Ces coûts incluent les coûts de développement du nouvel équipement, mais aussi des coûts liés à la gestion de nouvelles références désignant les nouveaux équipements.

Compte tenu du nombre relativement important d'équipements avioniques, ces coûts peuvent donc s'avérer importants.

La deuxième approche consiste à utiliser des équipements avioniques qui ne sont pas protégés contre les courants transitoires subis en vol, notamment suite à un impact de foudre.

En parallèle, le constructeur équipe le système avionique avec des boîtiers de protection spécifiques montés en série sur les liaisons filaires. Ces boîtiers de protection incluent alors des dispositifs protégeant les équipements avioniques contre des courants transitoires destructeurs.

Cette deuxième approche est aussi coûteuse en nécessitant une pluralité de boîtiers de protection qui sont dédiés à la protection des équipements avioniques, par ailleurs lourds.

A l'instar de la deuxième approche, une troisième approche consiste à utiliser des équipements avioniques qui ne sont pas protégés contre les courants transitoires subis en vol.

En parallèle, le constructeur équipe les liaisons filaires du système avionique avec des connecteurs incluant des dispositifs protégeant les équipements avioniques contre des courants transitoires destructeurs.

Un tel connecteur vise donc à supprimer un courant transitoire, pour notamment protéger un équipement avionique dépourvu de protection.

L'agencement de tels connecteurs peut s'avérer coûteux.

On connait notamment le document EP 0 512 927 B1 qui décrit un ensemble de contacts à suppression de courants transitoires. Cet ensemble comporte une varistance multicouche ayant une électrode active et une électrode de masse.

Le document US 5 846 099 n'appartient pas au domaine technique des équipements avioniques de la présente invention. Ce document US 5 846 099 présente un connecteur muni d'une diode-thyristor.

Le document US 2013/171852 et le document EP 2551771 présentent des architectures avioniques.

Le document US 2010/0123591 présente un connecteur s'étendant entre deux extrémités filetées. Ce connecteur comprend une barrière anti-explosion et un circuit imprimé.

Le document US 2003/0179533 décrit un dispositif de protection contre les surtensions.

On connait aussi le document US 2010/127193.

La présente invention a alors pour objet de proposer un aéronef muni d'un système avionique innovant tendant à supporter les effets indirects d'un impact de foudre.

Un tel aéronef selon la revendication 1 est muni d'une structure et d'un système avionique, le système avionique comprenant une pluralité d'équipements avioniques et un système de liaisons entre ces équipements avioniques, les équipements avioniques émettant et recevant des signaux d'entrée et de sortie et incorporant pour chaque signal d'entrée et de sortie un moyen de protection contre des effets indirects de la foudre, le système de liaisons incluant des liaisons filaires et des connecteurs entre ces liaisons filaires,

Au moins l'un des équipements avioniques est un équipement insuffisamment protégé, ledit équipement insuffisamment protégé ayant un moyen de protection qui comprend au moins un organe semi-conducteur et qui est insuffisant pour que ledit équipement insuffisamment protégé soit totalement protégé des effets indirects de la foudre au regard d'une spécification prédéterminée relative à l'intégration de cet équipement insuffisamment protégé dans la structure, chaque équipement insuffisamment protégé étant relié à au moins un connecteur dit « connecteur résistant » incluant une résistance agencée en série vis-à-vis d'au moins une liaison filaire solidaire du connecteur résistant.

Un équipement insuffisamment protégé peut être par exemple un équipement avionique monté sur un aéronef à structure métallique. Cet équipement peut alors disposer d'un moyen de protection insuffisant contre les effets de la foudre au regard de la spécification prédéterminée d'un constructeur, lorsque l'équipement est agencé sur un aéronef à structure à matériaux composites par exemple. Le moyen de protection comporte un organe semi-conducteur, tel qu'une diode par exemple.

Par suite, un tel équipement insuffisamment protégé s'avère doté d'une protection insuffisante pour son utilisation dans un aéronef muni d'une structure particulière, et donc pour respecter la spécification d'un constructeur d'aéronef.

Dans ce contexte, l'expression « insuffisant pour que ledit équipement insuffisamment protégé soit totalement protégé des effets indirects de la foudre » fait référence à un équipement ayant un moyen de protection ne garantissant pas à l'équipement concerné la faculté de supporter les courants transitoires générés par la foudre au sein de cette structure.

Le réflexe naturel de l'homme du métier consiste alors à modifier le moyen de protection d'un tel équipement insuffisamment protégé.

L'invention va à l'encontre de ce raisonnement en agençant une résistance dans au moins un connecteur relié à l'équipement insuffisamment protégé. Cette résistance est disposée en série par rapport aux câblages électriques reliés au connecteur pour s'assurer que le courant transitoire traversant le connecteur passe au travers de cette résistance.

Notamment, une résistance peut être fixée à la liaison filaire reliée directement à un équipement insuffisamment protégé. Cependant, une résistance peut aussi être intégrée dans un connecteur « d'arrêt » disposé entre deux zones différentes d'un aéronef.

Cette résistance n'a pas pour fonction de protéger à elle seule un équipement avionique contre les effets de la foudre. Une résistance n'est d'ailleurs pas assimilable aux diodes utilisées à cet effet. Chaque résistance constitue par contre un complément d'un moyen de protection insuffisant d'un équipement avionique.

La résistance peut avoir une valeur de résistance électrique comprise entre 1 et 5 Ohms.

Pour éviter toute confusion, on appelle « résistance » l'organe résistant agencé dans un connecteur, et « résistance électrique » la valeur en ohms de la résistance électrique de cet organe résistant.

La résistance comporte donc un organe résistant électriquement, générant par exemple une résistance électrique comprise entre 1 et 5 Ohms. L'organe résistant est donc un dipôle électrique, un composant électronique ou un bloc de matière générant la résistance électrique requise.

La résistance peut comporter un matériau résistant électriquement, tel que du carbone.

Chaque résistance permet de dissiper au moins partiellement l'énergie induite par un courant transitoire suite à un impact de foudre. Dès lors, le moyen de protection sous dimensionné pour une utilisation donnée d'un équipement insuffisamment protégé peut s'avérer suffisant pour éviter une dégradation de cet équipement insuffisamment protégé.

En outre, on comprend que l'invention peut être relativement facilement mise en oeuvre. De plus, l'intégration d'une résistance dans un connecteur peut éventuellement être réalisée en engendrant des surcoûts minimisés.

Cette invention permet aussi une certaine flexibilité en adaptant la valeur de la résistance électrique au besoin.

L'intégration en série de résistances dans des connecteurs d'aéronef pour lutter contre les effets indirects de la foudre n'a rien d'évident.

En effet, on rappelle que cette intégration tend à aller contre les préjugés naturels existants.

De plus, cette intégration a de fait une influence non négligeable sur la résistance électrique globale des liaisons filaires. L'homme du métier peut alors considérer que cet agencement risque d'induire des dysfonctionnements dans des conditions normales d'utilisation.

Cependant, la demanderesse note que cette intégration est physiquement possible, en adaptant si nécessaire par exemple la taille des fils des liaisons filaires ou en réduisant la longueur de ces liaisons filaires.

Cet aéronef peut de plus comporter une ou plusieurs des caractéristiques additionnelles qui suivent.

Ainsi, l'aéronef comportant des zones prédéterminées pour connecter des liaisons filaires, les connecteurs résistants sont agencés dans lesdites zones prédéterminées.

Cette caractéristique vise à regrouper les connecteurs munis de résistances dans les mêmes zones. La maintenance et la modification du système avionique s'en trouve facilitée.

Par ailleurs, un connecteur résistant comportant un organe mâle et un organe femelle, l'organe mâle étant partiellement insérable de manière réversible dans l'organe femelle, la résistance est agencée dans l'organe femelle. Par exemple, un desdits organes mâle et femelle est relié à une liaison filaire, l'autre organe étant relié à une autre liaison filaire ou à un équipement. Favorablement l'organe femelle est relié à une liaison filaire, l'organe male étant relié soit à une autre liaison filaire soit à un équipement.

Un connecteur comprend usuellement un contact mâle et un contact femelle. Le contact mâle peut être fixé à la structure de l'aéronef, le contact femelle représentant alors un organe mobile pouvant être emmanché sur le contact mâle. Cette caractéristique tend à minimiser les risques de dégradation du connecteur. La résistance est alors agencée dans l'organe femelle d'un connecteur.

Cette caractéristique permet notamment de limiter les couts de développement, l'organe mâle d'un connecteur ne nécessitant pas une modification.

Selon une première réalisation, l'organe femelle comporte une portion arrière électriquement conductrice qui est par exemple solidarisée à une extrémité d'une liaison filaire, et une portion avant électriquement conductrice munie d'un orifice avant dans lequel est inséré un contact mâle électriquement conducteur d'un organe mâle. La résistance du connecteur est alors insérée entre la portion arrière et la portion avant en étant électriquement en contact avec la portion arrière et la portion avant.

Chaque orifice peut avoir une forme sensiblement cylindrique.

Un courant transitoire électrique passant par le connecteur, transite alors nécessairement par la résistance.

Par exemple, la résistance est insérée dans une gaine isolante électriquement saillant longitudinalement de part et d'autre de ladite résistance, cette gaine étant solidarisée à la portion arrière et à la portion avant.

La gaine peut être un tube creux rigide ou souple, et de forme sensiblement cylindrique.

Dès lors, la résistance est agencée au sein de la gaine. De plus, la portion avant et la portion arrière du connecteur sont solidarisées à la gaine, en restant chacune en contact avec la résistance. Par exemple, la portion avant et la portion arrière sont aussi insérées dans la gaine de part et d'autre de la résistance.

La gaine permet donc de solidariser la portion avant à la portion arrière. Cette gaine étant isolante électriquement, le courant transitant dans le connecteur traverse de fait la résistance.

La gaine peut être réalisée avec tout matériau isolant électriquement.

La résistance peut par ailleurs comporter un bloc de matière électriquement résistante inséré dans la gaine et en contact avec la portion avant et la portion arrière. Un tel bloc de matière peut être un bloc de carbone.

Selon une deuxième réalisation, l'organe femelle comportant une portion arrière électriquement conductrice, qui est par exemple solidarisée à une extrémité de ladite deuxième liaison filaire, et une portion avant électriquement conductrice munie d'un orifice avant dans lequel est inséré un contact mâle électriquement conducteur d'un organe mâle, la résistance est insérée dans l'orifice avant pour être interposé entre l'organe femelle et le contact mâle, la portion avant étant solidarisée à la portion arrière.

Cette résistance comporte éventuellement un fourreau plaqué contre une paroi de la portion avant délimitant l'orifice avant, ce fourreau étant ouvert pour accueillir le contact mâle.

L'invention et ses avantages apparaîtront avec plus de détails dans le cadre de la description qui suit avec des exemples donnés à titre illustratif en référence aux figures annexées qui représentent :
- la figure 1, un schéma montrant un aéronef selon l'invention,
- la figure 2, une coupe d'un connecteur selon une première réalisation, et
- la figure 3, une coupe d'un connecteur selon une deuxième réalisation.

Les éléments présents dans plusieurs figures distinctes sont affectés d'une seule et même référence.

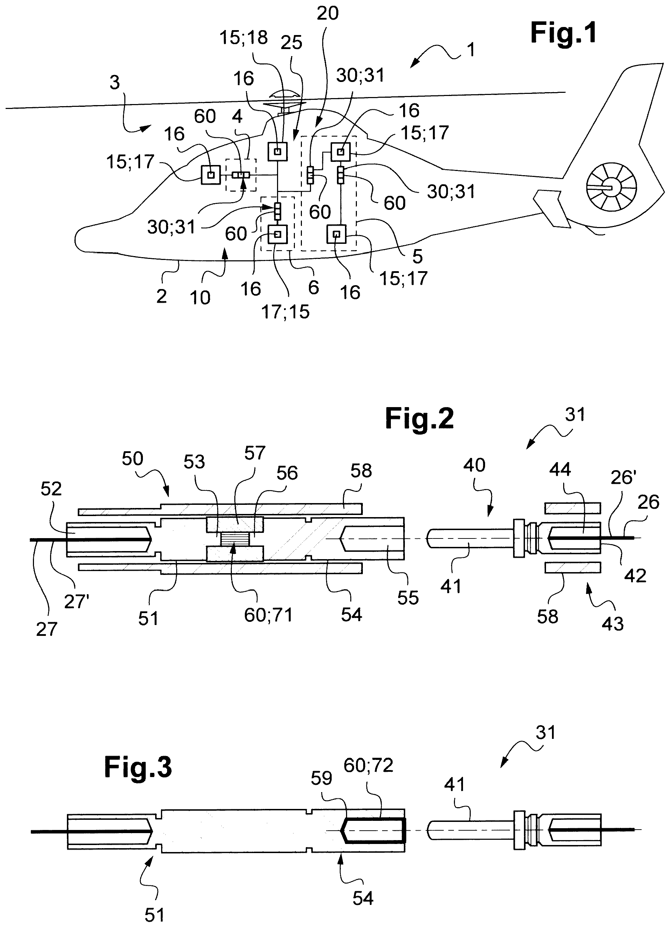

La figure 1 présente un aéronef 1 muni d'une structure 2. Cet aéronef 1 peut être un giravion, la structure 2 portant alors une voilure tournante 3. La structure 2 peut être réalisée à partir de matériaux métalliques ou de matériaux composites.

Cet aéronef 1 est pourvu d'un système avionique 10 incluant une pluralité d'équipements avioniques 15 reliés entre eux par un système de liaisons 20. Ce système de liaisons 20 possède une pluralité de liaisons filaires 25 et de connecteurs 30.

Par suite, chaque équipement avionique 15 émet des signaux de sortie vers les liaisons filaires, et reçoit des signaux d'entrée provenant de ces liaisons filaires.

En outre, chaque équipement avionique 15 comporte un moyen de protection pour être au moins partiellement protégé contre les courants transitoires induit par un impact de foudre. Un tel moyen de protection est un moyen usuel, muni d'une diode de suppression de tensions transitoires par exemple. On se référera à la littérature pour obtenir des informations si besoin.

Néanmoins, certains équipements avioniques peuvent comprendre un moyen de protection qui est sous-dimensionné au regard des exigences résultant de l'agencement de l'équipement avionique au sein d'une structure particulière.

Un tel équipement avionique est dit « équipement insuffisamment protégé 17 ».

Les équipements avioniques comprenant un moyen de protection adapté aux exigences résultant de l'agencement de l'équipement avionique au sein d'une structure particulière sont dénommés « équipement suffisamment protégé 18 ». Le système avionique peut en être dépourvu.

En complément des moyens de protection intégrés, le système avionique peut comporter au moins un connecteur 30 dit « connecteur résistant 31 ». Par exemple, chaque équipement insuffisamment protégé 17 est lié directement ou indirectement par une liaison filaire à un connecteur résistant 31.

Un tel connecteur résistant 31 inclut une résistance 60 qui est agencée en série vis-à-vis d'au moins une liaison filaire solidaire de ce connecteur résistant, et par exemple entre deux liaisons filaires 25 solidaires de ce connecteur résistant 31. La résistance peut être obtenue à l'aide d'un matériau électriquement résistant, tel que du carbone.

Eventuellement, l'intérieur de l'aéronef peut être partagé en une pluralité de zones 4, 5, 6 dans lesquelles sont plus particulièrement agencés les connecteurs résistants.

Indépendamment du mode de réalisation et en référence à la figure 2, un connecteur et notamment un connecteur résistant 31 peut comporter un organe mâle 40 et un organe femelle 50.

La résistance 60 est alors favorablement localisée dans l'organe femelle qui représente l'organe mobile du connecteur manipulé par un opérateur.

L'organe mâle s'étend longitudinalement d'un tronçon arrière 42 vers un contact mâle 41. Le tronçon arrière 42 et le contact mâle 41 forment conjointement une pièce électriquement conductrice, par exemple unique.

Le tronçon arrière 42 est alors par exemple solidarisé à une extrémité 26' d'une première liaison filaire 26. Cette première liaison filaire 26 est par exemple sertie dans une ouverture 44 du tronçon arrière 42. Le tronçon arrière peut aussi être relié à une liaison équipement d'un équipement.

Le contact mâle 41 prend par exemple la forme d'un cylindre.

Par ailleurs, l'organe femelle 50 comporte une portion arrière 51 électriquement conductrice qui est par exemple solidarisée à une extrémité 27' d'une deuxième liaison filaire 27.

Par exemple, la portion arrière 51 inclut un orifice arrière 52 dans lequel est insérée une extrémité 27' de la deuxième liaison filaire 27.

De plus, l'organe femelle 50 comporte une portion avant 54 électriquement conductrice. Cette portion avant 54 est munie d'un orifice avant 55 dans lequel peut être inséré le contact mâle 41 de l'organe mâle du connecteur.

Selon le premier mode de réalisation représenté sur la figure 2, la résistance 60 d'un connecteur résistant est disposée dans l'organe femelle entre la portion arrière 51 et la portion avant 54. De plus, cette résistance est électriquement en contact avec cette portion arrière 51 et la portion avant 54.

Cette résistance 60 est enfoncée dans une gaine 57 isolante électriquement. Cette gaine saille longitudinalement de part et d'autre de la résistance 60 en définissant un couloir arrière et un couloir avant de part et d'autre de la résistance.

Dès lors, la gaine 57 est solidarisée à la portion arrière 51, cette portion arrière comprenant un pion arrière 53 traversant ledit couloir arrière pour atteindre la résistance. De même, la gaine 57 est solidarisée à la portion avant 54, cette portion avant comprenant un pion avant traversant ledit couloir avant pour atteindre la résistance.

Eventuellement, la résistance 60 comporte un bloc 71 de matière électriquement résistante inséré dans la gaine 57.

Indépendamment de la réalisation, des moyens de recouvrement 58 usuels peuvent recouvrir au moins partiellement l'organe femelle et/ ou l'organe mâle.

La figure 3 présente un deuxième mode de réalisation.

Selon ce deuxième mode de réalisation, la portion arrière 51 et la portion avant 54 de l'organe femelle 50 peuvent être solidaires l'une de l'autre. Par exemple, cette portion arrière 51 et cette portion avant 54 forment une pièce unique.

Dès lors, la résistance 60 du connecteur résistant est insérée dans l'orifice avant 55 de la portion avant. Par exemple, la résistance 60 comporte un fourreau 72 résistant électriquement inséré dans l'orifice avant. Ce fourreau est alors plaqué contre une paroi 59 de la portion avant 54 délimitant l'orifice avant 55.

De plus, ce fourreau 72 est ouvert à une extrémité pour pouvoir accueillir le contact mâle 41 de l'organe mâle.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Aéronef (1) muni d'une structure (2) et d'un système avionique (10), ledit système avionique (10) comprenant une pluralité d'équipements avioniques (15) et un système de liaisons (20) entre ces équipements avioniques (15), lesdits équipements avioniques (15) émettant et recevant des signaux d'entrée et de sortie ; lesdits équipements avioniques (15) incorporant pour chaque signal d'entrée et de sortie un moyen de protection (16) contre des effets indirects de la foudre, ledit système de liaisons (20) incluant des liaisons filaires (25) et des connecteurs (30) entre ces liaisons filaires (25), ledit système avionique étant destiné à respecter une spécification définissant des effets indirects de la foudre à supporter,
**caractérisé en ce qu'**au moins l'un des équipements avioniques (15) est un équipement insuffisamment protégé (17), ledit équipement insuffisamment protégé (17) ayant un moyen de protection (16) dit « sous-dimensionné » qui comprend au moins un organe semi-conducteur ; ce moyen de protection (16) dit sous-dimensionné étant insuffisant pour que ledit équipement insuffisamment protégé (17) soit totalement protégé desdits effets indirects de la foudre induisant un courant électrique transitoire prédéterminé par une spécification prédéterminée, relative à l'intégration dans ladite structure (2) de cet équipement insuffisamment protégé (17) contre le courant électrique transitoire prédéterminé, chaque équipement insuffisamment protégé (17) étant relié à au moins un connecteur (30) dit « connecteur résistant (31) » du système de liaisons (20) ; ledit au moins un connecteur résistant (31) incluant une résistance (60) agencée en série vis-à-vis d'au moins une liaison filaire (25) solidaire dudit connecteur résistant (31), le connecteur résistant (31) comportant un organe mâle (40) et un organe femelle (50), l'organe mâle (40) étant partiellement insérable de manière réversible dans l'organe femelle (50), ladite résistance (60) étant agencée dans l'organe femelle (50) ; ladite résistance (60) dissipant au moins partiellement l'énergie induite par un courant transitoire suite à un impact de foudre, évitant ainsi une dégradation de l'équipement insuffisamment protégé (17).

2. Aéronef selon la revendication 1,
**caractérisé en ce que** ledit aéronef (1) comportant des zones (4, 5, 6) prédéterminées pour connecter des liaisons filaires (25), les connecteurs résistants (31) sont agencés dans lesdites zones prédéterminées.

3. Aéronef selon l'une quelconque des revendications 1 à 2,
**caractérisé en ce que** ledit organe femelle (50) comporte une portion arrière (51) électriquement conductrice et une portion avant (54) électriquement conductrice munie d'un orifice avant (55) dans lequel est inséré un contact mâle (41) électriquement conducteur d'un organe mâle (40), ladite résistance (60) est insérée entre la portion arrière (51) et la portion avant (54) en étant électriquement en contact avec la portion arrière (51) et la portion avant (54).

4. Aéronef selon la revendication 3,
**caractérisé en ce que** ladite résistance (60) est insérée dans une gaine (57) isolante électriquement saillant longitudinalement de part et d'autre de ladite résistance (60), ladite gaine (57) étant solidarisé à la portion arrière (51) et à la portion avant (54).

5. Aéronef selon la revendication 4,
**caractérisé en ce que** ladite résistance (60) comporte un bloc (71) de matière électriquement résistante inséré dans ladite gaine (57) et en contact avec la portion avant (54) et la portion arrière (51).

6. Aéronef selon la revendication 1,
**caractérisé en ce que** ledit organe femelle (50) comporte une portion arrière (51) électriquement conductrice et une portion avant (54) électriquement conductrice munie d'un orifice avant (55) dans lequel est inséré un contact mâle (41) électriquement conducteur d'un organe mâle (40), ladite résistance (60) est insérée dans l'orifice avant (55) pour être interposée entre l'organe femelle (50) et ledit contact mâle (41), la portion avant (54) étant solidarisée à la portion arrière (51).

7. Aéronef selon la revendication 6,
**caractérisé en ce que** ladite résistance (60) comporte un fourreau (72) plaqué contre une paroi (59) de la portion avant (54) délimitant l'orifice avant (55), ledit fourreau (72) étant ouvert pour accueillir ledit contact mâle (41).

8. Aéronef selon l'une quelconque des revendications 1 à 7,
**caractérisé en ce que** ladite résistance (60) comporte un matériau résistant électriquement.

9. Aéronef selon la revendication 8,
**caractérisé en ce que** ledit matériau comporte du carbone.

## Patentansprüche

1. Luftfahrzeug (1) mit einem Aufbau (2) und einem Avioniksystem (10), wobei das Avioniksystem (10) eine Mehrzahl von Avionikausrüstungen (15) und ein Verbindungssystem (20) zwischen den Avionikausrüstungen (15) aufweist, wobei die Avionikausrüstungen (15) Eingangs- und Ausgangssignale aussenden und empfangen, wobei die Avionikausrüstungen (15) für jedes Eingangssignal und Ausgangssignal ein Schutzmittel (16) gegen indirekte Blitzschlageffekte aufweisen, wobei das Verbindungssystem (20) Verbindungskabel (25) und Verbinder (30) zwischen den Verbindungskabeln (25) umfasst, wobei das Avioniksystem dazu bestimmt ist, eine Spezifikation zu respektieren, die die indirekten Effekte des zu erfahrenden Blitzeinschlags definiert, **dadurch gekennzeichnet, dass** mindestens eine der Avionikausrüstungen (15) eine unzureichend geschützte Ausrüstung (17) ist, wobei die unzureichend geschützte Ausrüstung (17) ein "unterdimensioniertes" Schutzmittel (16) aufweist, das mindestens ein Halbleiterelement umfasst, wobei dieses unterdimensioniert genannte Schutzmittel (16) nicht ausreicht, um die unzureichend geschützte Ausrüstung (17) vollständig vor den indirekten Effekten des Blitzeinschlags zu schützen, der einen durch die vorbestimmte Spezifikation vorbestimmten Übergangsstrom induziert, wobei bezüglich der Integration dieser gegen den vorbestimmten elektrischen Übergangsstrom unzureichend geschützten Ausrüstung (17) in dem Aufbau (2) jede unzureichend geschützte Ausrüstung (17) mit mindestens einem "Widerstandsverbinder (31)" genannten Verbinder (30) des Verbindungssystems (20) verbunden ist, wobei der mindestens eine Widerstandsverbinder (31) einen Widerstand (60) aufweist, der in Reihe bezüglich mindestens einer Kabelverbindung (25) angeordnet ist, die mit dem Widerstandsverbinder (31) fest verbunden ist, wobei der Widerstandsverbinder (31) ein Einführelement (40) und ein Aufnahmeelement (50) aufweist, wobei das Einführelement (40) teilweise reversibel in das Aufnahmeelement (50) einfügbar ist, wobei der Widerstand (60) in dem Aufnahmeelement (50) angeordnet ist, wobei der Widerstand (60) mindestens teilweise die von dem Übergangsstrom induzierte Energie infolge eines Blitzeinschlags ableitet, um so eine Beschädigung der unzureichend geschützten Ausrüstung (17) zu verhindern.

2. Luftfahrzeug nach Anspruch 1, **dadurch gekennzeichnet, dass** das Luftfahrzeug (1) vorbestimmte Bereiche (4, 5, 6) aufweist zum Verbinden der Verbindungskabel (25), wobei die Widerstandsverbinder (31) in diesen vorbestimmten Bereichen angeordnet sind.

3. Luftfahrzeug nach einem der Ansprüche 1 bis 2, **dadurch gekennzeichnet, dass** das Aufnahmeelement (50) einen elektrisch leitenden hinteren Bereich (51) und einen elektrisch leitenden vorderen Bereich (54) aufweist, der mit einer vorderen Öffnung (55) versehen ist, in der ein elektrisch leitender Stiftkontakt (41) eines Einführelements (40) eingefügt ist, der Widerstand (60) zwischen dem hinteren Bereich (51) und dem vorderen Bereich (54) eingefügt ist, wobei er in elektrischen Kontakt mit dem hinteren Bereich (51) und dem vorderen Bereich (54) steht.

4. Luftfahrzeug nach Anspruch 3, **dadurch gekennzeichnet, dass** der Widerstand (60) in eine elektrisch leitende Schutzhülle (57) eingefügt ist, die in Längsrichtung zu beiden Seiten des Widerstands (60) übersteht, wobei die Schutzhülle (57) mit dem hinteren Bereich (51) und dem vorderen Bereich (54) fest verbunden ist.

5. Luftfahrzeug nach Anspruch 4, **dadurch gekennzeichnet, dass** der Widerstand (60) einen Block (71) aus einem Material mit elektrischem Widerstand aufweist, der in die Schutzhülle (57) eingefügt ist und in Kontakt mit dem vorderen Bereich (54) und dem hinteren Bereich (51) steht.

6. Luftfahrzeug nach Anspruch 1, **dadurch gekennzeichnet, dass** das Aufnahmeelement (50) einen elektrisch leitenden hinteren Bereich (51) und einen elektrisch leitenden vorderen Bereich (54) aufweist, der mit einer vorderen Öffnung (55) versehen ist, in die ein elektrisch leitender Stiftkontakt (41) eines Einführelements (40) eingefügt ist, wobei der Widerstand (60) in die vordere Öffnung (55) eingefügt ist, um zwischen dem Aufnahmeelement (50) und dem Stiftkontakt (41) angeordnet zu sein, wobei der vordere Bereich (54) mit dem hinteren Bereich (51) fest verbunden ist.

7. Luftfahrzeug nach Anspruch 6, **dadurch gekennzeichnet, dass** der Widerstand (60) eine Hülse (72) aufweist, die auf eine Wandung (59) des vorderen Bereichs (54) geschichtet ist, die die vordere Öffnung (55) begrenzt, wobei die Hülse (72) offen ist, um den Stiftkontakt (41) aufzunehmen.

8. Luftfahrzeug nach einem der Ansprüche 1 bis 7, **dadurch gekennzeichnet, dass** der Widerstand (60) ein Material mit einem elektrischen Widerstand aufweist.

9. Luftfahrzeug nach Anspruch 8, **dadurch gekennzeichnet, dass** das Material Kohlenstoff aufweist.

## Claims

1. An aircraft (1) provided with a structure (2) and an avionics system (10), said avionics system (10) comprising a plurality of items of avionics equipment (15) and a system of connections (20) between these items of avionics equipment (15), said items of avionics equipment (15) emitting and receiving input and output signals; said items of avionics equipment (15) incorporating for each input and output signal a protection means (16) for protecting against indirect effects of lightning, said system of connections (20) including wired connections (25) and connectors (30) between these wired connections (25), said avionics system being intended to comply with a specification defining indirect effects of lightning which are to be withstood,
**characterised in that** at least one of the items of avionics equipment (15) is an insufficiently protected item of equipment (17), said insufficiently protected item of equipment (17) having a protection means (16) referred to as "under-dimensioned" which comprises at least one semiconductor member; this "under-dimensioned" protection means (16) being insufficient for said insufficiently protected item of equipment (17) to be totally protected from said indirect effects of lightning inducing a transient electric current predetermined by a predetermined specification, relative to the integration in said structure (2) of this item of equipment (17) which is insufficiently protected from the predetermined transient electric current, each insufficiently protected item of equipment (17) being connected to at least one connector (30) referred to as "resistive connector (31)" of the system of connections (20); said at least one resistive connector (31) including a resistor (60) arranged in series with respect to at least one wired connection (25) integral with said resistive connector (31), the resistive connector (31) comprising a male member (40) and a female member (50), the male member (40) being partially insertable in reversible manner into the female member (50), said resistor (60) being arranged in the female member (50); said resistor (60) dissipating at least in part the energy induced by a transient current following a lightning strike, thus avoiding degradation of the insufficiently protected item of equipment (17).

2. An aircraft according to Claim 1,
**characterised in that**, said aircraft (1) comprising predetermined zones (4, 5, 6) for connecting wired connections (25), the resistive connectors (31) are arranged in said predetermined zones.

3. An aircraft according to any one of Claims 1 to 2,
**characterised in that** said female member (50) comprises an electrically conductive rear portion (51) and an electrically conductive front portion (54) provided with a front orifice (55) into which is inserted an electrically conductive male contact (41) of a male member (40), said resistor (60) is inserted between the rear portion (51) and the front portion (54), while being electrically in contact with the rear portion (51) and the front portion (54).

4. An aircraft according to Claim 3,
**characterised in that** said resistor (60) is inserted into an electrically insulating sheath (57) projecting longitudinally on either side of said resistor (60), said sheath (57) being secured to the rear portion (51) and to the front portion (54).

5. An aircraft according to Claim 4,
**characterised in that** said resistor (60) comprises a block (71) of electrically resistive material inserted into said sheath (57) and in contact with the front portion (54) and the rear portion (51).

6. An aircraft according to Claim 1,
**characterised in that** said female member (50) comprises an electrically conductive rear portion (51) and an electrically conductive front portion (54) provided with a front orifice (55) into which is inserted an electrically conductive male contact (41) of a male member (40), said resistor (60) is inserted into the front orifice (55) in order to be interposed between the female member (50) and said male contact (41), the front portion (54) being secured to the rear portion (51).

7. An aircraft according to Claim 6,
**characterised in that** said resistor (60) comprises a sleeve (72) flattened against a wall (59) of the front portion (54) defining the front orifice (55), said sleeve (72) being open to receive said male contact (41).

8. An aircraft according to any one of Claims 1 to 7,
**characterised in that** said resistor (60) comprises an electrically resistive material.

9. An aircraft according to Claim 8,
**characterised in that** said material comprises carbon.
